(19) Europäisches Patentamt
European Patent Office
Office européen des brevets

(11) **EP 4 327 645 B1**

(12) **EUROPEAN PATENT SPECIFICATION**

(45) Date of publication and mention
of the grant of the patent:
**18.12.2024  Bulletin 2024/51**

(21) Application number: **23187142.7**

(22) Date of filing: **24.07.2023**

(51) International Patent Classification (IPC):
***A01D 69/02*** (2006.01)        ***B60K 7/00*** (2006.01)
***A01D 34/00*** (2006.01)        ***A01D 34/66*** (2006.01)

(52) Cooperative Patent Classification (CPC):
**A01D 69/02; B60K 7/0007;** A01D 34/008;
A01D 34/66; B60K 2007/0092

(54) **SELF-PROPELLED DEVICE**

SELBSTFAHRENDE VORRICHTUNG

DISPOSITIF AUTOMOTEUR

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority:  **17.08.2022   CN 202210987025
01.09.2022   CN 202211066921
01.09.2022   CN 202211066923
01.09.2022   CN 202211067847**

(43) Date of publication of application:
**28.02.2024   Bulletin 2024/09**

(73) Proprietor: **Nanjing Chervon Industry Co., Ltd.
Nanjing, Jiangsu 211106 (CN)**

(72) Inventors:
• **HU, Chenglong
Nanjing, Jiangsu (CN)**
• **GENG, Yazhou
Nanjing, Jiangsu (CN)**
• **XU, Haishen
Nanjing, Jiangsu (CN)**
• **CHEN, Yicong
Nanjing, Jiangsu (CN)**
• **YIN, Qiqi
Nanjing, Jiangsu (CN)**
• **MENG, Chao
Nanjing, Jiangsu (CN)**
• **FU, Huixing
Nanjing, Jiangsu (CN)**

(74) Representative: **Sun, Yiming
HUASUN Patent- und Rechtsanwälte
Friedrichstraße 33
80801 München (DE)**

(56) References cited:
WO-A1-2021/115364        CN-A- 101 383 540
CN-A- 112 806 165        DE-U1- 202009 002 353
KR-B1- 102 370 522

## Description

### RELATED APPLICATION INFORMATION

This application claims priority to Chinese Patent Application No. CN 202210987025.X, filed on Aug. 17, 2022, Chinese Patent Application No. CN 202211066921.9, filed on Sep. 1, 2022, Chinese Patent Application No. CN 202211066923.8, filed on Sep. 1, 2022, and Chinese Patent Application No. CN 202211067847.2, filed on Sep. 1, 2022.

### TECHNICAL FIELD

The present application relates to a self-propelled device.

### BACKGROUND

With the development of automated control technologies, smart devices have been widely promoted in the fields of family life and industrial production. As a smart robot integrated with functions such as autonomous movement and mowing, a smart mower greatly improves the efficiency of the garden and urban greening maintenance.

In the existing smart mower, a traveling electric motor and a cutting electric motor are generally disposed in the housing of the body, and the built-in traveling electric motor drives the traveling wheels to travel through a drive assembly such as a gear drive mechanism. The existing body mechanism has the following problems: the body volume is relatively large, and the drive assembly between the traveling electric motor and the traveling wheels increases the weight of the body and the complexity of installation. In the garden greening scenario, the large-volume and large-weight mower is inconvenient to use and move, affecting the user experience.

CN 112 806 165 A and WO 2021 115364 A1 each disclose a self-propelled device according to the preamble of appended claim 1.

### SUMMARY

According to the invention, a self-propelled device includes a cutting assembly for cutting vegetation; a body for supporting the cutting assembly; and a traveling system for driving the body to move. The traveling system includes at least a traveling wheel; and a wheel hub motor integrally disposed in the traveling wheel. The radial length of the wheel hub motor is greater than or equal to 18 cm and less than or equal to 33 cm; and the axial thickness of the wheel hub motor is less than or equal to 3.5 cm. An overall width of the self-propelled device in an axial direction is 0.2 m to 1.5 m, and the overall length of the self-propelled device in a direction perpendicular to the axial direction is 0.5 m to 1.5 m.

The self-propelled device further includes a connector for detachably mounting the wheel hub motor on a housing of the body, where the connector includes a mounting hole, a first end surface facing a side of the traveling wheel, and a second end surface facing away from the side of the traveling wheel, and the inner diameter of the mounting hole mates with the outer diameter of an output shaft of the wheel hub motor.

In an example, a limiting mechanism is disposed between the output shaft of the wheel hub motor and the connector and used for preventing a relative displacement from being generated between the output shaft and the connector, where the relative displacement includes an axial displacement and/or a circumferential displacement.

In an example, the limiting mechanism includes at least one of the following: at least one platform portion, at least one step portion, at least one protrusion, at least one groove portion, and at least one radial dimension gradient portion, where the at least one platform portion extends along an axial direction, is disposed in at least part of a region of the output shaft and the connector, and is used for limiting the circumferential displacement.

In an example, the limiting mechanism further includes an end surface limiting member, where the end surface limiting member is disposed on the second end surface, the end surface limiting member engages with and is fixed to a first groove of the output shaft, and the first groove is located at a projection of the second end surface on the output shaft.

In an example, the limiting mechanism further includes a rigid limiting member, where the rigid limiting member is detachably fixed to the housing of the body through a mounting assembly and fixed to the output shaft.

In an example, the self-propelled device further includes a sealing mechanism, where the sealing mechanism includes at least a first sealing mechanism, where the first sealing mechanism is disposed on a side of the output shaft facing the first end surface and used for sealing a contact surface between the connector and the output shaft.

In an example, the sealing mechanism further includes a second sealing mechanism, where the second sealing mechanism is disposed between the connector and the housing of the body and used for sealing a contact surface between the connector and the housing.

In an example, the self-propelled device includes a left traveling wheel and a right traveling wheel, where the distance between an outer end surface of a left wheel hub motor integrally disposed in the left traveling wheel and an outer end surface of a right wheel hub motor integrally disposed in the right traveling wheel is greater than the cutting width of the cutting assembly.

In an example, the output power of the wheel hub motor is greater than or equal to 1 W.

In an example, the cutting assembly includes a cutting electric motor, where along the axial direction of the traveling wheel, the distance between the cutting electric motor and the wheel hub motor is greater than zero and less than half of the first external dimension; and along the direction perpendicular to the axial direction of the traveling wheel, the distance between the cutting electric motor and the wheel hub motor is greater than or equal to zero and less than the second external dimension.

In an example, the number of magnetic pole pairs of the wheel hub motor is greater than or equal to 26 pairs.

In an example, the mechanical angle between any two adjacent magnetic poles of the wheel hub motor is less than or equal to 6.9°.

In an example, the energy density of the wheel hub motor is greater than or equal to 0.05 W/cm$^3$ and less than or equal to 0.5 W/cm$^3$.

In an example, when the overall weight of the self-propelled device is greater than or equal to 10 kg and less than or equal to 20 kg, the width of a hub is greater than or equal to 3 cm and less than or equal to 4 cm; when the overall weight is greater than 20 kg and less than or equal to 40 kg, the axial thickness of the wheel hub is greater than 4 cm and less than or equal to 6 cm; and when the overall weight is greater than 40 kg and less than or equal to 60 kg, the axial thickness of the wheel hub is greater than 6 cm and less than or equal to 9 cm.

## BRIEF DESCRIPTION OF DRAWINGS

To illustrate technical solutions in examples of the present application more clearly, drawings used in the description of the examples are briefly described below.

FIG. 1 is a structural view of a self-propelled device according to the present application;
FIG. 2 is a top view of an internal mounting structure of the self-propelled device in FIG. 1;
FIG. 3 is a structural view of a wheel hub motor according to the present application;
FIG. 4 is a schematic view of a mounting structure of a wheel hub motor according to the present application;
FIG. 5 is a sectional view of an output shaft of a wheel hub motor according to the present application;
FIG. 6 is a sectional view of an output shaft of another wheel hub motor according to the present application;
FIG. 7 is a sectional view of an output shaft of another wheel hub motor according to the present application;
FIG. 8 is an assembly view of the wheel hub motor in FIG. 4;
FIG. 9 is a sectional view of FIG. 8;
FIG. 10 is a partial enlarged view of part I in FIG. 9;
FIG. 11 is a schematic view of a mounting structure of another wheel hub motor according to the present application;
FIG. 12 is an assembly view of the wheel hub motor in FIG. 11;
FIG. 13 is a sectional view of FIG. 12;
FIG. 14 is a structural diagram of a traveling system for a self-propelled device according to the present application;
FIG. 15 is a control block diagram of an FOC circuit for a self-propelled device according to the present application;

## DETAILED DESCRIPTION

Before any examples of this application are explained in detail, it is to be understood that this application is not limited to its application to the structural details and the arrangement of components set forth in the following description or illustrated in the above drawings.

In this application, the terms "comprising", "including", "having" or any other variation thereof are intended to cover an inclusive inclusion such that a process, method, article or device comprising a series of elements includes not only those series of elements, but also other elements not expressly listed, or elements inherent in the process, method, article, or device. Without further limitations, an element defined by the phrase "comprising a ..." does not preclude the presence of additional identical elements in the process, method, article, or device comprising that element.

In this application, the term "and/or" is a kind of association relationship describing the relationship between associated objects, which means that there can be three kinds of relationships. For example, A and/or B can indicate that A exists alone, A and B exist simultaneously, and B exists alone. In addition, the character "/" in this application generally indicates that the contextual associated objects belong to an "and/or" relationship.

In this application, the terms "connection", "combination", "coupling" and "installation" may be direct connection, combination, coupling or installation, and may also be indirect connection, combination, coupling or installation. Among them, for example, direct connection means that two members or assemblies are connected together without intermediaries, and indirect connection means that two members or assemblies are respectively connected with at least one intermediate members and the two members or assemblies are connected by the at least one intermediate members. In addition, "connection" and "coupling" are not limited to physical or mechanical connections or couplings, and may include electrical connections or couplings.

In this application, it is to be understood by those skilled in the art that a relative term (such as "about", "approximately", and "substantially") used in conjunction with quantity or condition includes a stated value and has a meaning dictated by the context. For example, the relative term includes at least a degree of error associated with the measurement of a particular value, a tolerance caused by manufacturing, assembly, and use associated with the particular value, and the like. Such relative term should also be considered as disclosing the range defined by the absolute values of the two endpoints. The relative term may refer to plus or minus of a certain percentage (such as 1%, 5%, 10%, or more) of an indicated value. A value that did not use the relative term should also be disclosed as a particular value with a tolerance. In addition, "substantially" when expressing a relative angular position relationship (for example, substantially parallel, substantially perpendicular), may refer to adding or subtracting a certain degree (such as 1 degree, 5 degrees, 10 degrees or more) to the indicated angle.

In this application, those skilled in the art will understand that a function performed by an assembly may be performed by one assembly, multiple assemblies, one member, or multiple members. Likewise, a function performed by a member may be performed by one member, an assembly, or a combination of members.

In this application, the terms "up", "down", "left", "right", "front", and "rear" " and other directional words are described based on the orientation or positional relationship shown in the drawings, and should not be understood as limitations to the examples of this application. In addition, in this context, it also needs to be understood that when it is mentioned that an element is connected "above" or "under" another element, it can not only be directly connected "above" or "under" the other element, but can also be indirectly connected "above" or "under" the other element through an intermediate element. It should also be understood that orientation words such as upper side, lower side, left side, right side, front side, and rear side do not only represent perfect orientations, but can also be understood as lateral orientations. For example, lower side may include directly below, bottom left, bottom right, front bottom, and rear bottom.

In this application, the terms "controller", "processor", "central processor", "CPU" and "MCU" are interchangeable. Where a unit "controller", "processor", "central processing", "CPU", or "MCU" is used to perform a specific function, the specific function may be implemented by a single aforementioned unit or a plurality of the aforementioned unit.

In this application, the term "device", "module" or "unit" may be implemented in the form of hardware or software to achieve specific functions.

In this application, the terms "computing", "judging", "controlling", "determining", "recognizing" and the like refer to the operations and processes of a computer system or similar electronic computing device (e.g., controller, processor, etc.).

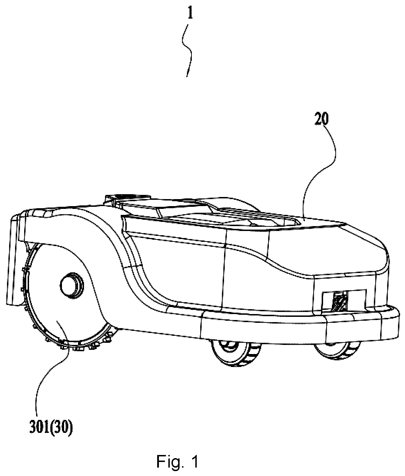

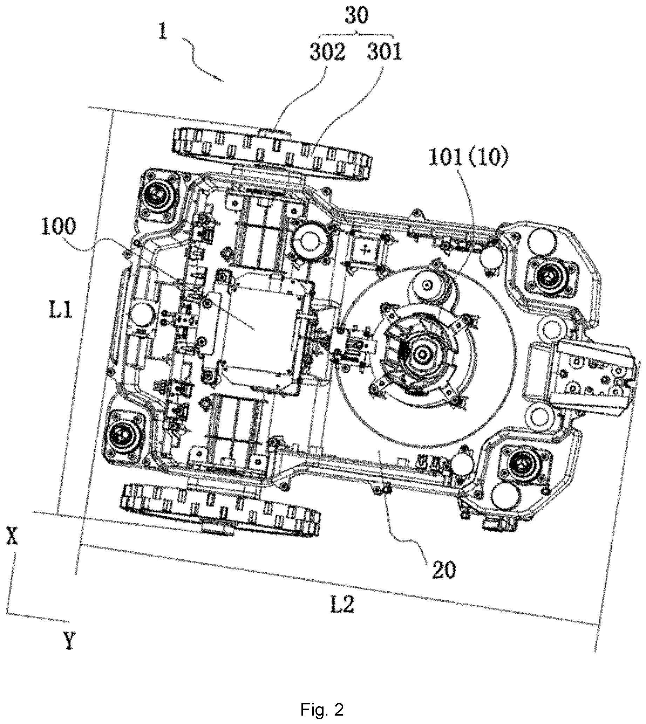

FIG. 1 is a structural view of a self-propelled device according to the present invention, and FIG. 2 is a top view of an internal mounting structure of the self-propelled device in FIG. 1. This example is applicable to a miniaturized and lightweight smart moving device, and the smart moving device may be used for outdoor working, for example, mowing vegetation such as lawns and weeds. In this example, a self-propelled device 1 may be a smart mower, and the smart mower may automatically perform the vegetation trimming operation without the human operation.

As shown in FIGS. 1 and 2, the self-propelled device 1 includes a cutting assembly 10 for cutting vegetation, a body 20 for supporting the cutting assembly 10, and a traveling system 30 for driving the body 20 to move. In this example, the body 20 includes a body housing and a chassis mechanism for protecting the self-propelled device 1, where the chassis mechanism may be used for fixing and supporting the cutting assembly 10.

As shown in FIG. 2, the cutting assembly 10 may include a cutting electric motor 101 and a cutting portion, where the cutting electric motor 101 drives the cutting portion to perform the vegetation cutting operation.

As shown in FIG. 2, the traveling system 30 includes at least a traveling wheel 301, a wheel hub motor 302 integrally disposed in the traveling wheel 301, and a control circuit 100 for controlling the operation state of the wheel hub motor 302. In this example, the self-propelled device 1 may be provided with two drive wheels and one driven wheel, and the wheel hub motor 302 is integrally disposed in each of the drive wheels on two sides, that is to say, the traveling wheel 301 into which the wheel hub motor 302 is integrated may be disposed on each side of the self-propelled device 1. The wheel hub motor 302 being integrally disposed in the traveling wheel 301 may be understood as the wheel hub motor 302 includes at least an electric motor body and an output shaft, where the electric motor body is partially disposed in the traveling wheel 301, and the output shaft is partially disposed in the traveling wheel 301 or partially protrudes to the outside of the traveling wheel 301. When the self-propelled device 1 is working, the wheel hub motor 302 directly drives the traveling wheel 301 to rotate, and the wheel hub motor 302 outputs the specific power to drive the traveling wheel 301 to rotate at an angle matching the output power, thereby controlling the self-propelled device 1 to move.

In conjunction with FIG. 2, along an axial direction X of the traveling wheel 301, the first external dimension L1 of the self-propelled device 1 is greater than or equal to 0.2 m and less than or equal to 1.5 m; and along a direction Y perpendicular to the axial direction of the traveling wheel 301, the second external dimension L2 of the self-propelled device 1 is greater than or equal to 0.5 m and less than or equal to 1.5 m. In an example, along a direction Z perpendicular to the axial direction of the traveling wheel 301, the third external dimension L3 of the self-propelled device 1 is greater than or equal to 0.1 m and less than or equal to 1 m.

In conjunction with FIG. 2, along the axial direction X of the traveling wheel, the first distance between the cutting electric motor 101 and the wheel hub motor

302 is greater than zero and less than half of the first external dimension L1; and along the direction Y perpendicular to the axial direction of the traveling wheel 301, the second distance between the cutting electric motor 101 and the wheel hub motor 302 is greater than or equal to zero and less than the second external dimension L2.

The first distance between the cutting electric motor 101 and the wheel hub motor 302 refers to the distance between the central axis of the cutting electric motor 101 and the end surface on a side of the wheel hub motor 302 facing the cutting electric motor 101. The second distance between the cutting electric motor 101 and the wheel hub motor 302 refers to the distance between the central axis of the cutting electric motor 101 and the central axis of the wheel hub motor 302.

In this example, the first external dimension L1 of the self-propelled device 1 may be used for indicating the maximum overall width of the self-propelled device 1. Typically, the first external dimension L1 may be the distance between the outer end surfaces of two wheel hub motors 302. The second external dimension L2 may be used for indicating the maximum overall length of the self-propelled device 1. Typically, the second external dimension L2 may be the distance between the front end surface of the body and the rear end surface of the body of the self-propelled device 1. On the premise of not changing the design dimensions of the original body 20, the dimensions of the wheel hub motor 302 and the output shaft of the wheel hub motor 302 match the overall width and length of the self-propelled device 1.

The overall width of the self-propelled device 1 in the axial direction X is 0.2 m to 1.5 m, the overall length of the self-propelled device 1 in the direction Y perpendicular to the axial direction is 0.5 m to 1.5 m, the wheel hub motor 302 is used to replace the traveling electric motor originally disposed in the body 20, the wheel hub motor 302 is detachably assembled into the traveling wheel 301, and the wheel hub motor 302 directly drives the traveling wheel 301 to rotate and operate, eliminating the need for a gearbox and other structures between the traveling electric motor and the traveling wheels, which is conducive to reducing the dimension and weight of the whole machine.

Optionally, in the present application, the distance between the outer end surfaces of the wheel hub motors 302 is greater than the cutting width of the cutting assembly 10. Specifically, two traveling wheels 301 each integrated with the wheel hub motor 302 may be arranged symmetrically on two sides of the self-propelled device 1, and the distance between the outer end surfaces of the wheel hub motors 302 on two sides is greater than the cutting width of the cutting assembly 10, which is conducive to improving the cutting quality while achieving safety protection.

Optionally, the rotational speed of the wheel hub motor 302 may be greater than or equal to 8 rpm, thereby achieving low-speed driving.

Optionally, the output power of the wheel hub motor 302 is greater than or equal to 1 W In this example, the output power of the wheel hub motor 302 may be adjusted according to actual working conditions. For example, in the working condition of traveling on the flat ground, the output power of the wheel hub motor 302 is about 2.5 W to 3 W; and in the climbing condition, the output power of the wheel hub motor 302 may be 15 W

The wheel hub motor 302 in the present invention has a flat structure. The external dimension of the wheel hub motor 302 matches the external dimension and the installation position of the traveling wheel 301. Since the traveling wheel 301 has a flat structure and the distance between the traveling wheel 301 and the housing of the body 20 is relatively small, the flat wheel hub motor 302 is conducive to adapting to the original shape and structure of the self-propelled device 1.

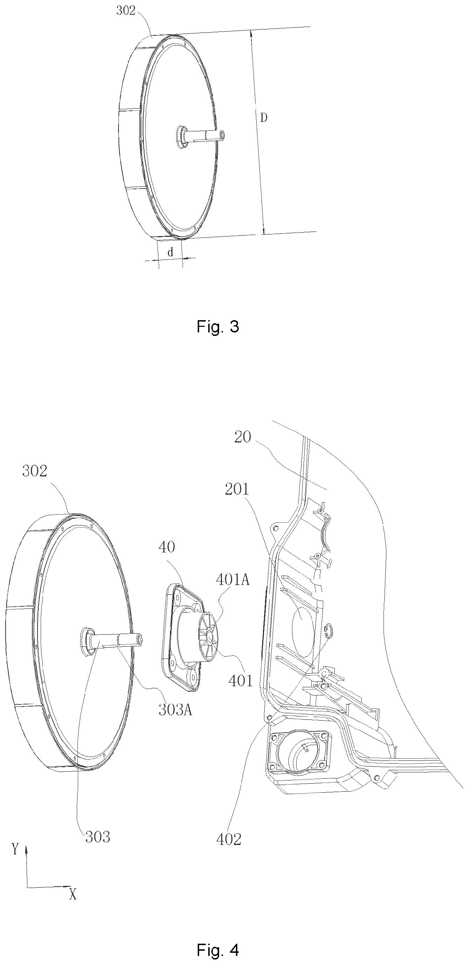

FIG. 3 is a structural view of a wheel hub motor according to the present application. As shown in FIG. 3, the radial length D of the wheel hub motor 302 is greater than or equal to 18 cm and less than or equal to 33 cm, and the axial thickness d of the wheel hub motor 302 is less than or equal to 3.5 cm. The radial length D and the axial thickness d of the wheel hub motor are adjusted so that the wheel hub motor 302 has a flat structure and can directly adapt to the original shape and structure of the self-propelled device 1, the change of the body housing caused by the replacement of the electric motor is avoided, and the structural versatility is strong.

Optionally, the wheel hub motor 302 may be made of materials such as aluminum, plastic, or steel.

Optionally, the energy density of the wheel hub motor 302 is greater than or equal to 0.05 $W/cm^3$ and less than or equal to 0.5 $W/cm^3$. The energy density of the electric motor refers to the ratio of the maximum output power of the wheel hub motor 302 to the weight, volume, or area of the entire wheel hub motor 302 or the self-propelled device 1. The greater the energy density of the wheel hub motor 302 is, the stronger the driving capability of the wheel hub motor 302 is. The energy density of the wheel hub motor is improved, which is conducive to ensuring the driving capability of the miniaturized and lightweight self-propelled device.

Optionally, the heat dissipation area of the wheel hub motor 302 may be 50 $cm^2$ to 300 $cm^2$. The heat dissipation area of the wheel hub motor 302 refers to the surface area of the winding part of the stator windings of the wheel hub motor 302. In this example, the heat dissipation area of the electric motor may be optimized by adjusting the number of turns, wire diameter, or winding density of the stator windings, and the heat dissipation capability of the wheel hub motor 302 is improved while the wheel hub motor 302 is flattened, which is conducive to improving the working efficiency of the wheel hub motor 302, improving the performance of the wheel hub motor, and improving the driving capability of the self-propelled device.

Optionally, the slot fill factor of the wheel hub motor 302 is greater than 45%. The slot fill factor refers to the proportion of space in the slot occupied by the stator windings of the wheel hub motor 302 after being put into the electrode slot. In this example, the slot fill factor of the wheel hub motor 302 may be adjusted by reducing the thickness of the insulating material or changing the number of wires and windings. The slot fill factor of the wheel hub motor 302 is improved and the energy loss caused by windings and temperature rise of the electric motor are reduced, which is conducive to improving the working efficiency of the wheel hub motor 302, improving the performance of the wheel hub motor, and improving the driving capability of the self-propelled device.

It is to be noted that, in the present application, the slot fill factor of the wheel hub motor 302 also matches the power supply voltage of the wheel hub motor 302.

Optionally, the number of magnetic pole pairs of the wheel hub motor 302 is greater than or equal to 26 pairs; or the mechanical angle between any two adjacent magnetic poles of the wheel hub motor 302 is less than or equal to 6.9°, thereby improving the rotor position detection accuracy of the electric motor.

Optionally, the axial thickness of the wheel hub of the wheel hub motor 302 is positively correlated with the overall weight of the self-propelled device 1 to match the requirements of different devices and different working conditions and provide electric motor adaptability, which is conducive to simplifying the assembly process.

In an example, when the overall weight is greater than or equal to 10 kg and less than or equal to 20 kg, the axial thickness of the wheel hub is greater than or equal to 3 cm and less than or equal to 4 cm; when the overall weight is greater than 20 kg and less than or equal to 40 kg, the axial thickness of the wheel hub is greater than 4 cm and less than or equal to 6 cm; and when the overall weight is greater than 40 kg and less than or equal to 60 kg, the axial thickness of the wheel hub is greater than 6 cm and less than or equal to 9 cm.

Therefore, in the present application, the wheel hub motor 302 is integrally disposed in the traveling wheel by adjusting the external dimension of the wheel hub motor 302 and the arrangement position of the wheel hub motor 302. Along the axial direction of the traveling wheel, the first external dimension of the self-propelled device is controlled to be greater than or equal to 0.2 m and less than or equal to 1.5 m; and along the direction perpendicular to the axial direction of the traveling wheel, the second external dimension of the self-propelled device is controlled to be greater than or equal to 0.5 m and less than or equal to 1.5 m. The wheel hub motor 302 directly drives the traveling wheel, eliminating the need for a drive assembly such as the gearbox, making the structure of the whole machine compact, and solving the problems of the large volume and large weight of the existing smart mower, which is conducive to saving the internal space of the body, improving space utilization, reducing the dimension and weight of the whole machine, and improving the user experience.

FIG. 4 is a schematic view of a mounting structure of a wheel hub motor according to the present application. Based on the example shown in FIG. 1, a specific example in which the wheel hub motor is fixed to the housing of the body 20 through a connector is illustrated.

As shown in FIG. 4, the self-propelled device 1 further includes a connector 40, the connector 40 includes a mounting hole 401, a first end surface 40A facing a side of the traveling wheel 301, and a second end surface 40B facing away from the side of the traveling wheel 301, and the inner diameter of the mounting hole 401 mates with the outer diameter of an output shaft 303 of the wheel hub motor 302. The connector 40 is used for detachably mounting the wheel hub motor 302 on the housing of the body 20.

In this example, the inner diameter of the mounting hole 401 may be configured to be greater than the outer diameter of the output shaft 303 of the wheel hub motor 302, and the inner diameter of the output shaft 303 of the wheel hub motor 302 is greater than the wire diameter of the electric motor cable * the number of wires of the electric motor cable.

For example, the outer diameter of the output shaft of the wheel hub motor 302 may be configured to be greater than 8 mm, and the inner diameter of the output shaft of the wheel hub motor 302 may be configured to be greater than 4 mm and less than 7 mm.

As shown in FIG. 4, a connector mounting hole 201 is disposed on the housing of the body 20. During the assembly process, the output shaft 303 of the wheel hub motor 302 is inserted through the mounting hole 401 of the connector 40, the second end surface of the connector 40 penetrates through the connector mounting hole 201, and the wheel hub motor 302 is detachably mounted on the housing of the body 20 through the connector 40.

In an example, a limiting mechanism is disposed between the output shaft 303 of the wheel hub motor 302 and the connector 40 and used for preventing a relative displacement from being generated between the output shaft and the connector 40, where the relative displacement includes an axial displacement and/or a circumferential displacement. That is, the limiting mechanism could be a limiting mechanism for preventing the axial displacement from being generated between the output shaft and the connector 40 and/or a limiting mechanism for preventing the circumferential displacement from being generated between the output shaft and the connector 40.

As shown in FIGS. 4 to 7, the limiting mechanism 3031 is provided between the output shaft 303 of the wheel hub motor 302 and the connector 40. In an example, the limiting mechanism 3031 may be at least one platform portion, where the platform portion extends along the axial direction X, is disposed in at least part of a region of the output shaft 303 and the connector 40, and is used for preventing the circumferential displacement from being generated between the output shaft and the connector 40. In this example, the platform portion includes at least a first platform portion 303A disposed on the output shaft 303 and a second platform portion 401A disposed in the mounting hole 401. The first platform portion 303A and the second platform portion 401A both extend along the axial direction X, and the width of the first platform portion 303A matches the width of the second platform part 401A. During the assembly process, the first platform portion 303A is aligned with the second platform portion 401A, the output shaft 303 is inserted through the mounting hole 401 of the connector 40, and the first platform portion 303A and the second platform portion 401A of the connector 40 mate with each other to prevent the circumferential displacement from being generated between the output shaft and the connector 40, which is conducive to improving the assembly reliability.

It is to be noted that one or more first platform portions 303A may be formed on the output shaft 303 by using a metal cutting process, and the axial length, width, and number of the first platform portions 303A and second platform portions 401A are not limited on the premise of ensuring that the first platform portion 303A and the second platform portion 401A match and are assembled.

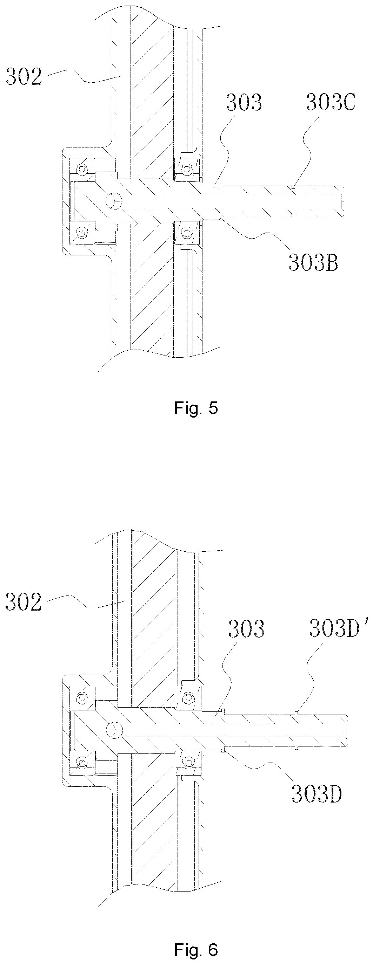

Optionally, FIG. 5 is a sectional view of an output shaft of a wheel hub motor according to the present application.

As shown in FIG. 5, the limiting mechanism 3031 may include at least one step portion 303B and at least one groove portion 303C disposed on the output shaft 303 of the wheel hub motor 302. In this example, the step portion 303B may play a blocking role. When the step portion 303B is in contact with the connector 40, the output shaft 303 of the wheel hub motor 302 cannot continue penetrating the mounting hole 401 of the connector 40. In this case, the groove portion 303C and a limiting member mate with each other and are mounted, thereby preventing the axial displacement from being generated between the output shaft and the connector 40.

It is to be noted that the limiting mechanism may further include a step portion disposed on the connector 40, whose function is the same as the function of the step portion disposed on the output shaft 303. The details are not repeated here.

Optionally, FIG. 6 is a sectional view of an output shaft of another wheel hub motor according to the present application.

As shown in FIG. 6, the limiting mechanism may further include at least one protrusion disposed on the output shaft 303 of the wheel hub motor 302. In this example, a fixing protrusion 303D may be disposed on a side of the output shaft 303 facing the wheel hub motor 302, a resettable protrusion 303D' may be disposed on a side of the output shaft 303 facing away from the wheel hub motor 302, and the distance between the fixing protrusion 303D and the resettable protrusion 303D' matches the depth of the mounting hole 401 of the connector 40. During the assembly process, when the resettable protrusion 303D' enters the mounting hole 401 of the connector 40, the resettable protrusion 303D' is compressed, the output shaft 303 continues penetrating the mounting hole 401 until the fixing protrusion 303D is in contact with the connector 40, the resettable protrusion 303D' pops out, and the fixing protrusion 303D mates with the resettable protrusion 303D' to prevent the axial displacement from being generated between the output shaft and the connector 40.

It is to be noted that the protrusion may have a square, rectangular, triangular, or semicircular structure, and those skilled in the art may adjust the shape, dimension, and number of the protrusions according to the processing difficulty, which is not limited.

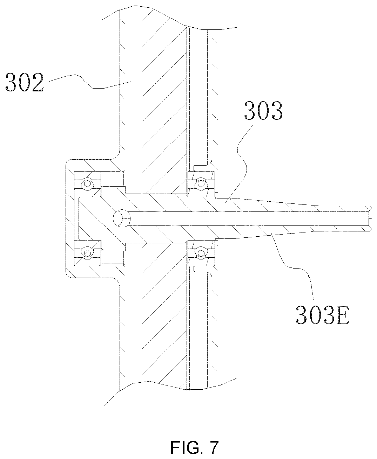

Optionally, FIG. 7 is a sectional view of an output shaft of another wheel hub motor according to the present application.

As shown in FIG. 7, the limiting mechanism may include at least one radial dimension gradient portion 303E. In this example, the radial dimension gradient portion 303E may be a part of the output shaft 303 of the wheel hub motor 302 that is thin in the front and thick in the rear. Correspondingly, the mounting hole 401 of the connector 40 also has a structure that is thin in the front and thick in the rear. The minimum radial dimension of the radial dimension gradient portion 303E is less than the minimum radial dimension of the mounting hole 401, and the maximum radial dimension of the radial dimension gradient portion 303E is greater than the maximum radial dimension of the mounting hole 401. During the assembly process, the output shaft 303 gradually penetrates the mounting hole 401 until the radial dimension of the output shaft 303 is greater than the radial dimension of the mounting hole 401, and the output shaft 303 of the wheel hub motor 302 cannot continue penetrating the mounting hole 401 of the connector 40. Further, the radial dimension gradient portion 303E may mate with the groove portion 303C and the limiting member to limit the axial displacement from being generated between the output shaft 303 and the connector 40.

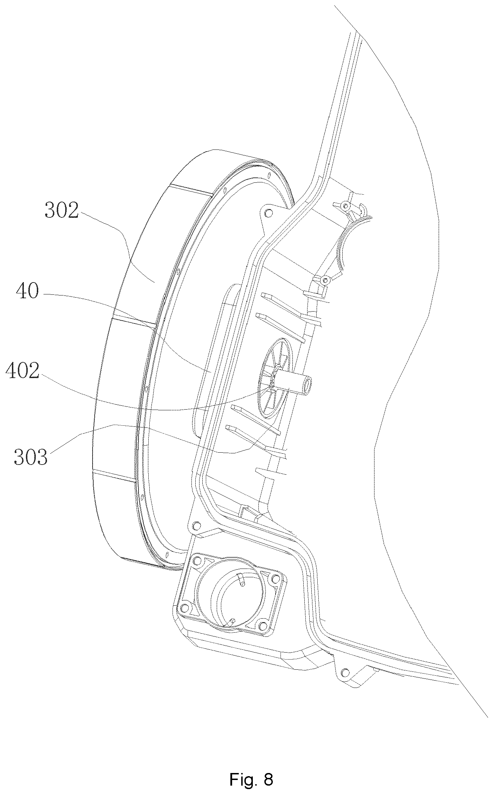

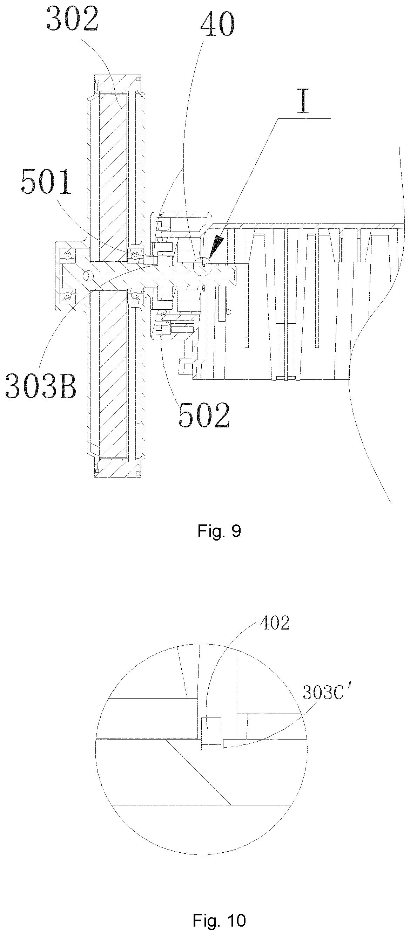

Optionally, FIG. 8 is an assembly view of the wheel hub motor in FIG. 4; FIG. 9 is a sectional view of FIG. 8; and FIG. 10 is a partial enlarged view of part I in FIG. 9.

As shown in FIG. 4 and FIGS. 8 to 10, the limiting mechanism further includes an end surface limiting member 402, where the end surface limiting member 402 is disposed on the second end surface of the connector 40, the end surface limiting member 402 engages with and is fixed to a first groove 303C' of the output shaft 303, and the first groove 303C' is located at the projection of the second end surface of the connector 40 on the output shaft 303.

Specifically, the end surface limiting member 402 may be a retainer ring or a hoop, and the retainer ring is provided with a fastening portion for adjusting the clamping pressure. After the first groove 303C' of the output shaft 303 protrudes from the mounting hole 401 of the connector 40, the end surface limiting member 402 engages with the first groove 303C', and the end surface limiting member 402 is fixed to the output shaft 303 through the fastening portion, so as to prevent the output shaft 303 from axially moving.

In conjunction with FIGS. 9 and 10, the self-propelled device 1 further includes a sealing mechanism, where the sealing mechanism includes at least a first sealing mechanism 501, where the first sealing mechanism 501 is disposed on a side of the output shaft facing the first end surface and used for sealing a contact surface between the connector 40 and the output shaft 303.

Specifically, the first sealing mechanism 501 may be a skeleton oil seal, and the first sealing mechanism 501 is filled in the gap between the connector 40 and the output shaft 303 and can prevent the liquid or dust from entering the inside of the body through the output shaft 303, which is conducive to improving the sealing performance of the device and improving the reliability of the device.

In conjunction with FIG. 9, the sealing mechanism further includes a second sealing mechanism 502, where the second sealing mechanism 502 is disposed between the connector 40 and the housing of the body 20 and used for sealing a contact surface between the connector 40 and the housing of the body.

Specifically, the second sealing mechanism 502 may be a rubber ring, and the second sealing mechanism 502 is disposed on the connector 40 and the housing of the body 20 and used for preventing the liquid or dust from entering the inside of the device through the connector 40, thereby improving the sealing performance of the device and improving the reliability of the device.

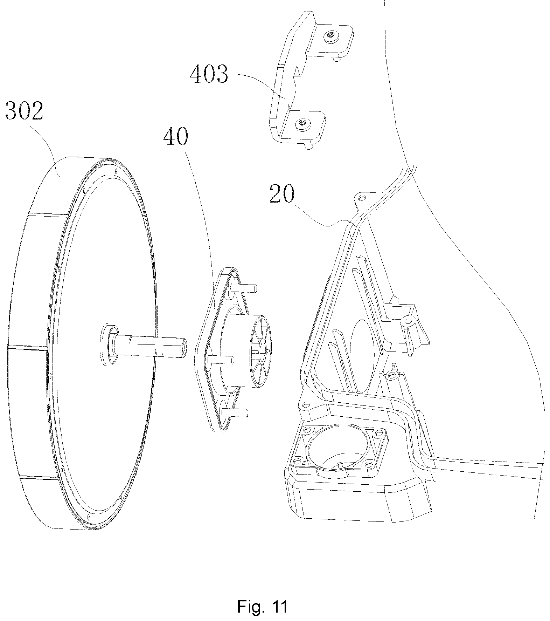

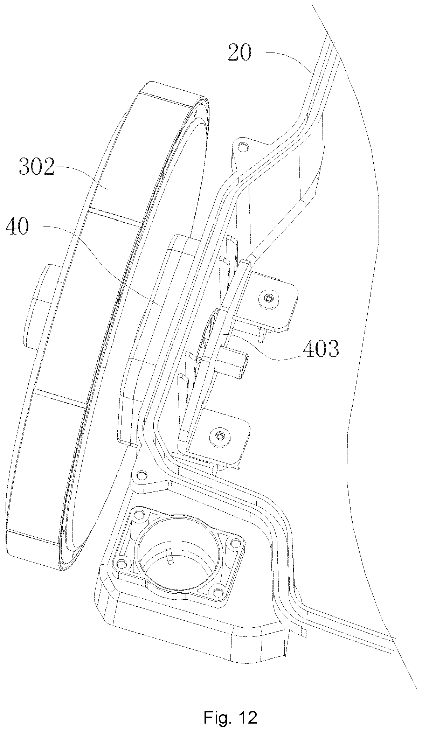

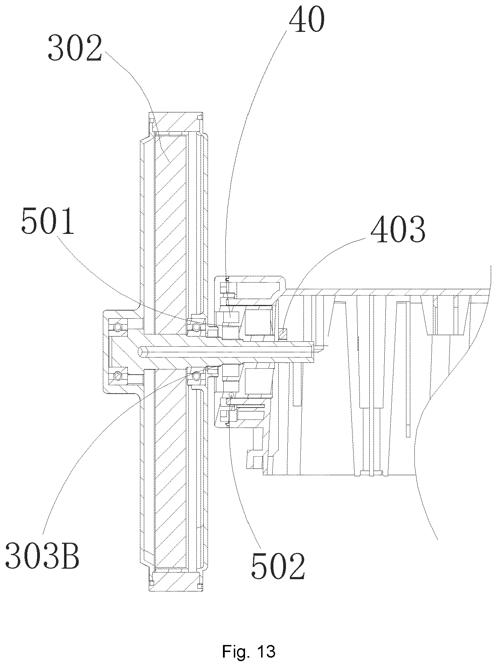

Optionally, FIG. 11 is a schematic view of a mounting structure of another wheel hub motor according to the present application; FIG. 12 is an assembly view of the wheel hub motor in FIG. 11; and FIG. 13 is a sectional view of FIG. 12. In this example, another specific example in which the wheel hub motor 302 is fixed to the housing of the body 20 through the connector is shown.

As shown in FIGS. 11 to 13, the limiting mechanism further includes a rigid limiting member 403, where the rigid limiting member 403 is detachably fixed to the housing of the body 20 through a mounting assembly, and the rigid limiting member 403 engages with and is fixed to the output shaft 303.

Specifically, the rigid limiting member 403 may be a steel plate, and the stopping strength of the steel plate is greater than the stopping strength of the retainer ring. The mounting assembly includes screw posts and a stiffener disposed on the body 20. After the output shaft 303 is assembled to a limit position of the mounting hole 401, the end surface limiting member 402 engages with and is fixed to the output shaft 303 through the symmetrical screw posts on two sides and the stiffener, so as to prevent the output shaft 303 from axially moving.

In this example, a platform portion (that is, a flat structure) may be disposed on the output shaft 303 of the wheel hub motor 302, and a groove matching the platform portion is disposed on the rigid limiting member 403, which is conducive to the installation of the rigid limiting member 403 while improving the structural reliability.

In this example, a second groove may also be disposed on a protruding portion of the output shaft 303 extending out of the mounting hole 401, and the end surface limiting member 402 is embedded in the second groove, thereby improving the structural reliability.

In conjunction with FIGS. 11 to 13, in this example, the self-propelled device 1 may be provided with sealing mechanisms such as the first sealing mechanism 501 and/or the second sealing mechanism 502 used for preventing the liquid or dust from entering the inside of the device through the connector 40 and the output shaft 303 of the wheel hub motor 302, which is conducive to improving the sealing performance of the device and improving the reliability of the device.

In conjunction with FIGS. 5 to 7, in this example, the limiting mechanism may be disposed between the output shaft 303 of the wheel hub motor 302 and the connector 40 and used for preventing the axial displacement and the circumferential displacement from being generated between the output shaft and the connector 40. In this example, the specific example and beneficial effects of the limiting mechanism are the same as those described in the preceding examples and are not repeated here.

Based on any of the preceding examples, the present application further provides a wheel hub motor for a self-propelled device, where the self-propelled device includes a traveling wheel, and the wheel hub motor is integrally disposed in the traveling wheel.

In conjunction with FIG. 3, the radial length of the wheel hub motor is greater than or equal to 18 cm and less than or equal to 33 cm, and the axial thickness of the wheel hub motor is less than or equal to 3.5 cm.

Optionally, the wheel hub motor 302 may be made of materials such as aluminum, plastic, or steel.

Optionally, the energy density of the wheel hub motor 302 is greater than or equal to $0.05 \text{ W/cm}^3$ and less than or equal to $0.5 \text{ W/cm}^3$. The energy density of the electric motor refers to the ratio of the maximum output power of the wheel hub motor 302 to the weight, volume, or area of the entire wheel hub motor 302 or the self-propelled device 1. The greater the energy density of the wheel hub motor 302 is, the stronger the driving capability of the wheel hub motor 302 is. The energy density of the wheel hub motor is improved, which is conducive to ensuring the driving capability of the miniaturized and lightweight self-propelled device.

Optionally, the heat dissipation area of the wheel hub motor 302 may be $50 \text{ cm}^2$ to $300 \text{ cm}^2$. The heat dissipation area of the wheel hub motor 302 refers to the surface area of the winding part of the stator windings of the wheel hub motor 302. In this example, the heat dissipation area of the electric motor may be optimized by adjusting the number of turns, wire diameter, or winding density of the stator windings, and the heat dissipation capability of the wheel hub motor 302 is improved while the wheel hub motor 302 is flattened, which is conducive to improving the working efficiency of the wheel hub motor 302, improving the performance of the wheel hub motor, and improving the driving capability of the self-propelled device.

Optionally, the slot fill factor of the wheel hub motor 302 is greater than 45%. The slot fill factor refers to the proportion of space in the slot occupied by the stator windings of the wheel hub motor 302 after being put into the electrode slot. In this example, the slot fill factor of the wheel hub motor 302 may be adjusted by reducing the thickness of the insulating material or changing the number of wires and windings. The slot fill factor of the wheel hub motor 302 is improved and the energy loss caused by windings and temperature rise of the electric motor are reduced, which is conducive to improving the working efficiency of the wheel hub motor 302, improving the performance of the wheel hub motor, and improving the driving capability of the self-propelled device. It is to be noted that, in the present application, the slot fill factor of the wheel hub motor 302 also matches the power supply voltage of the wheel hub motor 302.

Optionally, the number of magnetic pole pairs of the wheel hub motor 302 is greater than or equal to 26 pairs; or the mechanical angle between any two adjacent magnetic poles of the wheel hub motor 302 is less than or equal to 6.9°, which is conducive to improving the rotor position detection accuracy of the electric motor.

Optionally, the axial thickness of the wheel hub of the wheel hub motor 302 is positively correlated with the overall weight of the self-propelled device 1 to match the requirements of different devices and different working conditions and provide electric motor adaptability, which is conducive to simplifying the assembly process.

In an example, when the overall weight is greater than or equal to 10 kg and less than or equal to 20 kg, the axial thickness of the wheel hub is greater than or equal to 3 cm and less than or equal to 4 cm; when the overall weight is greater than 20 kg and less than or equal to 40 kg, the axial thickness of the wheel hub is greater than 4 cm and less than or equal to 6 cm; and when the overall weight is greater than 40 kg and less than or equal to 60 kg, the axial thickness of the wheel hub is greater than 6 cm and less than or equal to 9 cm.

Optionally, the rotational speed of the wheel hub motor 302 may be greater than or equal to 8 rpm, thereby achieving the low-speed driving of the self-propelled device.

Optionally, the output power of the wheel hub motor 302 is greater than or equal to 1 W In this example, the output power of the wheel hub motor 302 may be adjusted according to actual working conditions. For example, in the working condition of traveling on the flat ground, the output power of the wheel hub motor 302 is about 2.5 W to 3 W; and in the climbing condition, the output power of the wheel hub motor 302 may be 15 W

Therefore, in the present application, the wheel hub motor 302 is integrally disposed in the traveling wheel by adjusting the external dimension of the wheel hub motor 302 and the arrangement position of the wheel hub motor 302, and the wheel hub motor 302 directly drives the traveling wheel, eliminating the need for the drive assembly such as the gearbox, which directly adapts to the original shape and structure of the self-propelled device 1. In this manner, the change of the body housing caused by the replacement of the electric motor is avoided, and the structural versatility is strong, which is conducive to simplifying the assembly process of the electric motor and saving the production costs.

Based on the same conception of the application, the present application further provides a self-propelled device. Based on the self-propelled device in any of the preceding embodiments, a low-speed control closed-loop design of the electric motor is added to the traveling system, thereby simplifying the low-speed control strategy and improving the accuracy of the rotational speed adjustment of the electric motor.

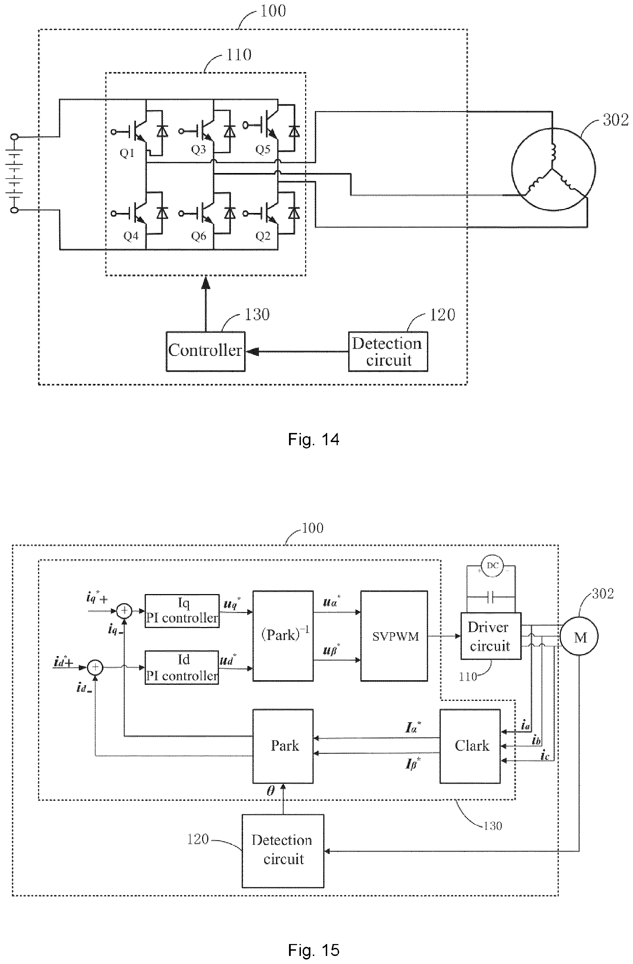

FIG. 14 is a structural diagram of a traveling system for a self-propelled device according to the present application.

As shown in FIG. 14, the control circuit 100 includes a driver circuit 110, a detection circuit 120, and a controller 130. The driver circuit 110 includes multiple switching elements. Typically, the multiple switching elements include a first switching element Q1, a second switching element Q2, a third switching element Q3, a four switching element Q4, a fifth switching element Q5, and a sixth switching element Q6, where the first switching element Q1 to the sixth switching element Q6 form a full-bridge circuit used for driving the wheel hub motor 302 to operate. The detection circuit 120 is used for acquiring an operation parameter of the wheel hub motor 302. The controller 130 is connected to the driver circuit 110 and outputs a control signal according to the operation parameter to change the conduction state of the switching element and control the rotational speed of the wheel hub motor 302 to be greater than or equal to 8 rpm.

It is to be noted that the smart mower in which the wheel hub motor is integrally disposed in the traveling wheel and the rotational speed of the wheel hub motor is greater than or equal to 8 rpm is within the scope of the present application. Alternatively, the smart mower whose traveling speed is greater than or equal to 0.1 m/s after the wheel hub motor is integrally disposed in the traveling wheel is within the scope of the present application.

In this example, the detection circuit 120 includes a speed and position estimation module and a current detection module. Typically, the Hall sensor may be used as the speed and position estimation module.

In an example, the control circuit 100 is an FOC circuit. The FOC circuit refers to a circuit that performs closed-loop control on the rotational speed of the wheel hub motor 302 through a vector control strategy.

FIG. 15 is a control block diagram of an FOC circuit for a self-propelled device according to the present application.

As shown in FIG. 15, the FOC circuit includes at least a current loop circuit and a speed loop circuit. Of course, the FOC circuit may further include a position loop circuit. The current loop circuit is used for performing a closed-loop adjustment on the electric motor current or output torque of the wheel hub motor 302, and the speed loop circuit is used for performing a closed-loop adjustment on the electric motor rotational speed of the wheel hub motor 302.

Specifically, as shown in FIG. 15, the speed loop circuit can affect the input parameter of the current loop circuit. That is to say, a proportional integral (PI) loop is added in front of the current loop circuit so as to obtain the speed loop circuit. The input parameters, that is, $i_d^*$ and $i_q^*$, in the current loop circuit are obtained according to a preset speed parameter and an actual rotational speed parameter of the wheel hub motor 302. In the current loop circuit, the three-phase currents ($i_a$, $i_b$, and $i_c$) in the three-phase stator coordinate system are acquired based on current sampling; then, vector decomposition is performed on the control current of the wheel hub motor 302, and based on the Clark transformation, the three-phase currents ($i_a$, $i_b$, and $i_c$) in the three-phase stator coordinate system are converted into the current parameters ($I_\alpha^*$ and $I_\beta^*$) in the two-phase stator coordinate system; then, based on the Park transformation, the current parameters ($I_\alpha^*$ and $I_\beta^*$) in the two-phase stator coordinate system are converted into the current parameters ($i_d$ and $i_q$) in the direct-quadrature (dq) coordinate system; further, the sampling PI controller performs a closed-loop adjustment on the output deviation of the current parameters ($i_d$ and $i_q$) in the dq coordinate system and outputs the voltage parameters ($u_d^*$ and $u_q^*$) in the dq coordinate system; further, the voltage parameters ($u_d^*$ and $u_q^*$) in the dq coordinate system are converted into the voltage parameters ($u_\alpha^*$ and $u_\beta^*$) in the two-phase stator coordinate system through the inverse Park transformation; and finally, the three-phase voltage parameters ($u_a$, $u_b$, and $u_c$) in the three-phase stator coordinate system are calculated based on the pulse-width modulation (PWM) wave modulation algorithm (such as the space vector pulse-width modulation (SVPWM) algorithm), so as to achieve the vector control of the wheel hub motor 302. Therefore, the current loop circuit and the speed loop circuit are provided, so as to form the double closed-loop control of speed and current. Optionally, the operation parameter includes a current parameter fed back from the detection circuit to the current loop circuit, and the current parameter is a continuously changing smooth parameter and determined based on a rotor position parameter of the wheel hub motor.

Optionally, the detection accuracy of the rotor position parameter is less than or equal to 2.3°.

Optionally, the estimation accuracy of the rotor position parameter is greater than or equal to 0.01°. In this example, the estimation accuracy of the rotor position parameter is positively correlated with the electric motor rotational speed of the wheel hub motor 302. When the electric motor rotational speed of the wheel hub motor 302 is 40 rpm, the estimation accuracy of the rotor position is 0.012°. When the electric motor rotational speed is about 8 rpm, the estimation accuracy of the rotor position may be around 0.01°.

Optionally, the number of magnetic pole pairs of the wheel hub motor 302 is greater than or equal to 26 pairs. In this example, the estimation accuracy of the rotor position parameter is negatively correlated with the number of magnetic pole pairs. When the number of magnetic pole pairs of the wheel hub motor 302 is equal to 26 pairs, the detection accuracy of the rotor position parameter is 2.3°. As the number of pole pairs increases, the detection accuracy of the rotor position parameter becomes less than 2.3°.

Optionally, the mechanical angle between any two adjacent magnetic poles of the wheel hub motor is less than or equal to 6.9°.

Specifically, the Hall element may be used to detect the rotor position, and the detection angle of the Hall element is greater than or equal to 6.9°. When the number of magnetic pole pairs of the wheel hub motor 302 is equal to 26 pairs, the mechanical angle between the magnetic poles is equal to 6.9°. The angular velocity of the rotor is calculated within a detection angle range (that is, 6.9°), and the rotor position may be calculated according to the angular velocity at any moment of the next 6.9°. At the turning point, the estimated rotor position is updated according to the rotor position detected by the Hall sensor so that the rotor position provided by the Hall element changes continuously, and the current parameter obtained based on the rotor position also changes continuously.

Therefore, in the technical solution of the embodiment of the present application, the traveling wheel, the wheel hub motor, and the control circuit are provided, the wheel hub motor is integrally disposed in the traveling wheel, the control circuit is provided with the driver circuit, the detection circuit, and the controller, the detection circuit acquires the operation parameter of the wheel hub motor, and the controller outputs the control signal according to the operation parameter to change the conduction state of the switching element and control the rotational speed of the wheel hub motor to be greater than or equal to 8 rpm. The electric motor is integrally disposed in the hub and the low-rotational-speed control closed-loop design is designed for the wheel hub motor, solving the problems of the large volume, large weight, and complex low-speed control strategy of the existing smart mower, which is conducive to reducing the dimension and weight of the whole machine, simplifying the low-speed control strategy, reducing the hardware costs, and improving the accuracy of the rotational speed adjustment.

Based on the same conception of the application, the present application further provides another self-propelled device. Based on the self-propelled device in any of the preceding embodiments, a low-speed control closed-loop design of the traveling wheel is added to the traveling system, thereby simplifying the low-speed control strategy and improving the speed adjustment accuracy of the device.

In this example, the control circuit includes a driver circuit including multiple switching elements and used for driving a wheel hub motor to operate; a detection circuit used for acquiring an operation parameter of the wheel hub motor; and a controller connected to the driver circuit and outputting a control signal according to the operation parameter to change the conduction state of the switching element and control the traveling speed of the traveling wheel to be greater than or equal to 0.1 m/s. The diameter of the wheel hub motor is greater than or equal to 18 cm and less than or equal to 33 cm.

In an example, the control circuit is the FOC circuit. The FOC circuit includes at least a current loop circuit and a speed loop circuit, where the current loop circuit is used for performing a closed-loop adjustment on the electric motor current or output torque of the wheel hub motor, and the speed loop circuit is used for performing a closed-loop adjustment on the electric motor rotational speed of the wheel hub motor.

Optionally, the operation parameter includes a current parameter fed back from the detection circuit to the current loop circuit, and the current parameter is a continuously changing smooth parameter and determined based on a rotor position parameter of the wheel hub motor.

Optionally, the detection accuracy of the rotor position parameter is less than or equal to 2.3°.

Optionally, the estimation accuracy of the rotor position parameter is greater than or equal to 0.01°.

Optionally, the number of magnetic pole pairs of the wheel hub motor is greater than or equal to 26 pairs.

Optionally, the mechanical angle between any two adjacent magnetic poles of the wheel hub motor is less than or equal to 6.9°.

Therefore, in the technical solution of the embodiment of the present application, the traveling wheel, the wheel hub motor, and the control circuit are provided, the wheel hub motor is integrally disposed in the traveling wheel, the control circuit is provided with the driver circuit, the detection circuit, and the controller, the detection circuit acquires the operation parameter of the wheel hub motor, and the controller outputs the control signal according to the operation parameter to change the conduction state of the switching element and control the traveling speed of the traveling wheel to be greater than or equal to 0.1 m/s. The electric motor is integrally disposed in the hub and the low-rotational-speed control closed-loop design is designed for the traveling wheel, solving the problems of the large volume, large weight, and complex low-speed control strategy of the existing smart mower, which is conducive to reducing the dimension and weight of the whole machine, simplifying the low-speed control strategy, reducing the hardware costs, and improving the accuracy of the rotational speed adjustment.

An example provides a push working machine, where the push working machine includes a handle, a wheel assembly, and at least one drive motor. The handle forms a grip for the user to hold, and the user may operate the push working machine by holding the handle. The wheel assembly includes at least one wheel, and the number of wheels may be set to 1, 2, 3, 4, or more according to requirements. At least part of the drive motor is disposed in the wheel to at least drive the wheel to move. Specifically, a motor shaft of the drive motor coincides with a rotation axis of the corresponding wheel, and the motor shaft of the drive motor is directly connected to the wheel, so as to directly drive the corresponding wheel to rotate. More specifically, the number of drive motors and the number of wheels may be the same so that one drive motor drives only one wheel to rotate. Of course, the number of drive motors may be different from the number of wheels so that one drive motor drives two wheels with basically coincident rotation axes. In some specific examples, the drive motor is a brushless motor. In some more specific examples, the drive motor is an outer rotor wheel hub motor.

In this example, the total rated power P1 of the drive motor is less than or equal to 1000 W Optionally, the total rated power P1 of the drive motor is greater than or equal to 100 W and less than or equal to 1000 W It is to be noted here that the total rated power of the drive motor is the sum of the power of all the drive motors used for driving the wheel assembly. If different drive motors (for example, the drive motors include the wheel hub motor and an electric motor of another type) separately drive different wheels of the wheel assembly, the total rated power of the drive motor is the sum of the power of the wheel hub motor and the power of the electric motor of another type. Specifically, it is to be noted that the total rated power of the drive motor is not the output power of the push working machine. For example, when the push working machine is specifically a walk-behind four-wheel drive working machine, the total rated power P1 of the drive motor is as high as 1000 W The rated voltage U1 of the drive motor is greater than or equal to 12 V and less than or equal to 120 V. Optionally, the rated voltage U1 of the drive motor is greater than or equal to 20 V and less than or equal to 120 V. The rated voltage U2 of the push working machine is greater than or equal to 18 V. Optionally, the rated voltage U2 of the push working machine is greater than or equal to 36 V. Further optionally, the rated voltage U2 of the push working machine is greater than or equal to 40 V and less than or equal to 120 V. The efficiency $\eta 1$ of the drive motor is greater than 70%. In a specific example, the efficiency $\eta 1$ of the drive motor is 75%. In another specific example, the efficiency $\eta 1$ of the drive motor is 80%. In another specific example, the efficiency $\eta 1$ of the drive motor is 85%.

In the push working machine, at least part of the drive motor is disposed in the wheel so that the drive motor is directly connected to the wheel, eliminating the need for a transmission mechanism and ensuring the advantages of a simple structure, easy control, small space occupation, and low requirements for the assembly process.

It is to be noted that the cooling method of the push working machine may be natural cooling or may be cooling by injecting oil between the wheel hub motor and the wheel.

The push working machine may specifically be a snow thrower and a mower. The snow thrower and the mower are used as examples for the further detailed description below.

The basic principles, main features, and advantages of this application are shown and described above. It is to be understood by those skilled in the art that the aforementioned examples do not limit the present application and that other solutions fall within the scope of the present invention, which is defined by the appended claims.

**Claims**

1. A self-propelled device (1), comprising:

   a cutting assembly (10) for cutting;
   a body (20) for supporting the cutting assembly (10); and
   a traveling system (30) for driving the body (20) to move;
   wherein the traveling system (30) comprises at least:

   a traveling wheel (301); and
   a wheel hub motor (302) integrally disposed in the traveling wheel (301); wherein an overall width of the self-propelled device (1) in an axial direction (X) is 0.2 m to 1.5 m, the overall length of the self-propelled device (1) in a direction (Y) perpendicular to the axial direction (X) is 0.5 m to 1.5 m; **characterized in that**

   a radial length (D) of the wheel hub motor (302) is greater than or equal to 18 cm and less than or equal to 33 cm;
   an axial thickness (d) of the wheel hub motor (302) is less than or equal to 3.5 cm; and
   the wheel hub motor (302) is detachably mounted on a housing of the body (20) by a connector (40), wherein the connector (40) comprises a mounting hole (401), a first end surface (40A) facing a side of the traveling wheel (301), and a second end surface (40B) facing away from the side of the traveling wheel (301), and an inner diameter of the mounting hole (401) mates with an outer diameter of an output shaft (303) of the wheel hub motor (302).

2. The self-propelled device (1) of claim 1, wherein a limiting mechanism (3031) is disposed between the output shaft (303) of the wheel hub motor (302) and the connector (40) and used for preventing a relative displacement from being generated between the output shaft (303) and the connector (40), wherein the relative displacement comprises an axial displacement and/or a circumferential displacement.

3. The self-propelled device (1) of claim 2, wherein the limiting mechanism (3031) comprises at least one of the following: at least one platform portion, at least one step portion, at least one protrusion, at least one groove portion, and at least one radial dimension gradient portion, wherein the at least one platform portion extends along an axial direction, is disposed in at least part of a region of the output shaft (303) and the connector (40), and is used for limiting the circumferential displacement.

4. The self-propelled device (1) of claim 2, wherein the limiting mechanism (3031) further comprises an end surface limiting member (402), wherein the end surface limiting member (402) is disposed on the second end surface (40B), the end surface limiting member (402) engages with and is fixed to a first groove (303C') of the output shaft (303), and the first groove is located at a projection of the second end surface (40B) on the output shaft (303).

5. The self-propelled device (1) of claim 2, wherein the limiting mechanism (3031) further comprises a rigid limiting member (403), wherein the rigid limiting member (403) is detachably fixed to the housing of the body (20) through a mounting assembly and the rigid limiting member (403) is fixed to the output shaft (303).

6. The self-propelled device (1) of claim 1, further comprising a sealing mechanism, wherein the sealing mechanism comprises at least a first sealing mechanism (501), wherein the first sealing mechanism (501) is disposed on a side of the output shaft (303) facing the first end surface (40A) and used for sealing a contact surface between the connector (40) and the output shaft (303).

7. The self-propelled device (1) of claim 6, wherein the sealing mechanism further comprises a second sealing mechanism (502), wherein the second sealing mechanism (502) is disposed between the connector (40) and the housing of the body (20) and used for sealing a contact surface between the connector (40) and the housing.

8. The self-propelled device (1) of claim 1, comprising a left traveling wheel (301) and a right traveling wheel (301), wherein a distance between an outer end surface of a left wheel hub motor (302) integrally disposed in the left traveling wheel (301) and an outer end surface of a right wheel hub motor (302) integrally disposed in the right traveling wheel (301) is greater than a cutting width of the cutting assembly (10).

9. The self-propelled device (1) of claim 1, wherein output power of the wheel hub motor (302) is greater than or equal to 1 W

10. The self-propelled device (1) of claim 1, wherein a number of magnetic pole pairs of the wheel hub motor (302) is greater than or equal to 26 pairs.

11. The self-propelled device (1) of claim 1, wherein a mechanical angle between any two adjacent magnetic poles of the wheel hub motor (302) is less than or equal to 6.9°.

12. The self-propelled device (1) of claim 1, wherein an energy density of the wheel hub motor (302) is greater than or equal to 0.05 $W/cm^3$ and less than or equal to 0.5 $W/cm^3$.

13. The self-propelled device (1) of claim 1, wherein when an overall weight of the self-propelled device (1) is greater than or equal to 10 kg and less than or equal to 20 kg, the axial thickness (d) of the wheel hub is greater than or equal to 3 cm and less than or equal to 4 cm; when the overall weight is greater than 20 kg and less than or equal to 40 kg, the axial thickness (d) of the wheel hub is greater than 4 cm and less than or equal to 6 cm; and when the overall weight is greater than 40 kg and less than or equal to 60 kg, the axial thickness (d) of the wheel hub is greater than 6 cm and less than or equal to 9 cm.

**Patentansprüche**

1. Selbstfahrende Vorrichtung (1), umfassend:

   eine Schneidebaugruppe (10) zum Schneiden;
   einen Körper (20) zum Stützen der Schneidebaugruppe (10); und
   ein Fahrsystem (30), um den Körper (20) zu bewegen;
   wobei das Fahrsystem (30) mindestens umfasst:

   ein Laufrad (301); und
   einen Radnabenmotor (302), der integral in dem Laufrad (301) angeordnet ist; wobei eine Gesamtbreite der selbstfahrenden Vorrichtung (1) in einer axialen Richtung (X) 0,2 m bis 1,5 m beträgt, die Gesamtlänge der selbstfahrenden Vorrichtung (1) in einer Richtung (Y) senkrecht zu der axialen Richtung (X) 0,5 m bis 1,5 m beträgt;
   **dadurch gekennzeichnet, dass**
   eine radiale Länge (D) des Radnabenmotors (302) größer als oder gleich 18 cm und kleiner als oder gleich 33 cm ist;
   eine axiale Dicke (d) des Radnabenmotors (302) kleiner als oder gleich 3,5 cm ist; und
   der Radnabenmotor (302) durch einen Verbinder (40) abnehmbar an einem Gehäuse des Körpers (20) montiert ist, wobei der Verbinder (40) ein Montageloch (401), eine erste Endfläche (40A), die einer Seite des Laufrades (301) zugewandt ist, und eine zweite Endfläche (40B), die von der Seite des Laufrades (301) abgewandt ist, umfasst, und ein Innendurchmesser des Montagelochs (401) mit einem Außendurchmesser einer Abtriebswelle (303) des Radnabenmotors (302) zusammenpasst.

2. Selbstfahrende Vorrichtung (1) nach Anspruch 1, wobei ein Begrenzungsmechanismus (3031) zwischen der Abtriebswelle (303) des Radnabenmotors (302) und dem Verbinder (40) angeordnet ist und zum Verhindern eines Erzeugens einer relativen Verschiebung zwischen der Abtriebswelle (303) und dem Verbinder (40) verwendet wird, wobei die relative Verschiebung eine axiale Verschiebung und/oder eine Umfangsverschiebung umfasst.

3. Selbstfahrende Vorrichtung (1) nach Anspruch 2, wobei der Begrenzungsmechanismus (3031) mindestens eines der folgenden Merkmale umfasst: mindestens einen Plattformabschnitt, mindestens einen Stufenabschnitt, mindestens einen Vorsprung, mindestens einen Nutabschnitt und mindestens einen Abschnitt mit radialem Abmessungsgradienten, wobei sich der mindestens eine Plattformabschnitt entlang einer axialen Richtung erstreckt, in mindestens einem Teil eines Bereichs der Abtriebswelle (303) und des Verbinders (40) angeordnet ist und zum Begrenzen der Umfangsverschiebung verwendet wird.

4. Selbstfahrende Vorrichtung (1) nach Anspruch 2, wobei der Begrenzungsmechanismus (3031) ferner ein Endflächenbegrenzungselement (402) umfasst, wobei das Endflächenbegrenzungselement (402) an der zweiten Endfläche (40B) angeordnet ist, das Endflächenbegrenzungselement (402) in eine erste Nut (303C') der Abtriebswelle (303) eingreift und daran befestigt ist, und die erste Nut sich an einem Vorsprung der zweiten Endfläche (40B) auf der Abtriebswelle (303) befindet.

5. Selbstfahrende Vorrichtung (1) nach Anspruch 2, wobei der Begrenzungsmechanismus (3031) ferner ein starres Begrenzungselement (403) umfasst, wobei das starre Begrenzungselement (403) über eine Montagebaugruppe abnehmbar an dem Gehäuse des Körpers (20) befestigt ist und das starre Begrenzungselement (403) an der Abtriebswelle (303) befestigt ist.

6. Selbstfahrende Vorrichtung (1) nach Anspruch 1, die ferner einen Dichtungsmechanismus umfasst, wobei der Dichtungsmechanismus mindestens einen ersten Dichtungsmechanismus (501) umfasst, wobei der erste Dichtungsmechanismus (501) auf einer Seite der Abtriebswelle (303) angeordnet ist, die der ersten Endfläche (40A) zugewandt ist, und zum Abdichten einer Kontaktfläche zwischen dem Verbinder (40) und der Abtriebswelle (303) verwendet wird.

7. Selbstfahrende Vorrichtung (1) nach Anspruch 6, wobei der Dichtungsmechanismus ferner einen zweiten Dichtungsmechanismus (502) umfasst, wobei der zweite Dichtungsmechanismus (502) zwischen dem Verbinder (40) und dem Gehäuse des Körpers (20) angeordnet ist und zum Abdichten einer Kontaktfläche zwischen dem Verbinder (40) und dem Gehäuse verwendet wird.

8. Selbstfahrende Vorrichtung (1) nach Anspruch 1, die ein linkes Laufrad (301) und ein rechtes Laufrad (301) umfasst, wobei ein Abstand zwischen einer äußeren Endfläche eines linken Radnabenmotors (302), der integral in dem linken Laufrad (301) angeordnet ist, und einer äußeren Endfläche eines rechten Radnabenmotors (302), der integral in dem rechten Laufrad (301) angeordnet ist, größer als eine Schneidebreite der Schneidebaugruppe (10) ist.

9. Selbstfahrende Vorrichtung (1) nach Anspruch 1, wobei eine Ausgangsleistung des Radnabenmotors (302) größer als oder gleich 1 W ist.

10. Selbstfahrende Vorrichtung (1) nach Anspruch 1, wobei eine Anzahl von Magnetpolpaaren des Radnabenmotors (302) größer als oder gleich 26 Paare ist.

11. Selbstfahrende Vorrichtung (1) nach Anspruch 1, wobei ein mechanischer Winkel zwischen zwei beliebigen benachbarten Magnetpolen des Radnabenmotors (302) kleiner als oder gleich 6,9° ist.

12. Selbstfahrende Vorrichtung (1) nach Anspruch 1, wobei eine Energiedichte des Radnabenmotors (302) größer als oder gleich 0,05 W/cm$^3$ und kleiner als oder gleich 0,5 W/cm$^3$ ist.

13. Selbstfahrende Vorrichtung (1) nach Anspruch 1, wobei, wenn ein Gesamtgewicht der selbstfahrenden Vorrichtung (1) größer als oder gleich 10 kg und kleiner als oder gleich 20 kg ist, die axiale Dicke (d) der Radnabe größer als oder gleich 3 cm und kleiner als oder gleich 4 cm ist; wenn das Gesamtgewicht größer als 20 kg und kleiner als oder gleich 40 kg ist, die axiale Dicke (d) der Radnabe größer als 4 cm und kleiner als oder gleich 6 cm ist; und wenn das Gesamtgewicht größer als 40 kg und kleiner als oder gleich 60 kg ist, die axiale Dicke (d) der Radnabe größer als 6 cm und kleiner als oder gleich 9 cm ist.

**Revendications**

1. Dispositif auto-propulsé (1), comprenant :

   un ensemble de coupe (10) pour couper ;
   un corps (20) pour supporter l'ensemble de coupe (10) ; et
   un système de déplacement (30) pour entraîner le corps (20) en déplacement ;
   dans lequel le système de déplacement (30) comprend au moins :

   une roue de déplacement (301) ; et
   un moteur de moyeu de roue (302) disposé intégralement dans la roue de déplacement (301) ;
   dans lequel une largeur globale du dispositif auto-propulsé (1) dans une direction axiale (X) est de 0,2 m à 1,5 m, la longueur globale du dispositif auto-propulsé (1) dans une direction (Y) perpendiculaire à la direction axiale (X) est de 0,5 m à 1,5 m ;
   **caractérisé en ce que**
   une longueur radiale (D) du moteur de moyeu de roue (302) est supérieure ou égale à 18 cm et inférieure ou égale à 33 cm ;
   une épaisseur axiale (d) du moteur de moyeu de roue (302) est inférieure ou égale à 3,5 cm ;

le moteur de moyeu de roue (302) est monté de manière séparable sur un logement du corps (20) par un connecteur (40), dans lequel le connecteur (40) comprend un trou de montage (401), une première surface d'extrémité (40A) faisant face à un côté de la roue de déplacement (301), et une seconde surface d'extrémité (40B) étant orientée à distance du côté de la roue de déplacement (301), et un diamètre intérieur du trou de montage (401) correspond à un diamètre extérieur d'un arbre de sortie (303) du moteur de moyeu de roue (302).

2. Dispositif auto-propulsé (1) selon la revendication 1, dans lequel un mécanisme de limitation (3031) est disposé entre l'arbre de sortie (303) du moteur de moyeu de roue (302) et le connecteur (40) et utilisé pour éviter un déplacement relatif d'être généré entre l'arbre de sortie (303) et le connecteur (40), dans lequel le déplacement relatif comprend un déplacement axial et/ou un déplacement circonférentiel.

3. Dispositif auto-propulsé (1) selon la revendication 2, dans lequel le mécanisme de limitation (3031) comprend au moins un de ce qui suit :
au moins une partie de plateforme, au moins une partie d'étage, au moins une saillie, au moins une partie de rainure, et au moins une partie de gradient de dimension radiale, dans lequel l'au moins une partie de plateforme s'étend le long d'une direction axiale, est disposée dans au moins une partie d'une région de l'arbre de sortie (303) et du connecteur (40) et est utilisée pour limiter le déplacement circonférentiel.

4. Dispositif auto-propulsé (1) selon la revendication 2, dans lequel le mécanisme de limitation (3031) comprend un membre de limitation de surface d'extrémité (402), dans lequel le membre de limitation de surface d'extrémité (402) est disposé sur la seconde surface d'extrémité (40B), le membre de limitation de surface d'extrémité (402) s'engage avec et est fixé à une première rainure (303C') de l'arbre de sortie (303), et la première rainure est située sur une saillie de la seconde surface d'extrémité (40B) sur l'arbre de sortie (303).

5. Dispositif auto-propulsé (1) selon la revendication 2, dans lequel le mécanisme de limitation (3031) comprend en outre un membre de limitation rigide (403), dans lequel le membre de limitation rigide (403) est fixé de manière séparable au logement du corps (20) par un ensemble de montage et le membre de limitation rigide (403) est fixé à l'arbre de sortie (303).

6. Dispositif auto-propulsé (1) selon la revendication 1, comprenant en outre un mécanisme d'étanchéité, dans lequel le mécanisme d'étanchéité comprend au moins un premier mécanisme d'étanchéité (501), dans lequel le premier mécanisme d'étanchéité (501) est disposé sur un côté de l'arbre de sortie (303) faisant face à la première surface d'extrémité (40A) et utilisé pour étanchéifier une surface de contact entre le connecteur (40) et l'arbre de sortie (303).

7. Dispositif auto-propulsé (1) selon la revendication 6, dans lequel le mécanisme d'étanchéité comprend en outre un second mécanisme d'étanchéité (502), dans lequel le second mécanisme d'étanchéité (502) est disposé entre le connecteur (40) et le logement du corps (20), et utilisé pour étanchéifier une surface de contact entre le connecteur (40) et le logement.

8. Dispositif auto-propulsé (1) selon la revendication 1, comprenant une roue de déplacement gauche (301) et une roue de déplacement droite (301), dans lequel une distance entre une surface d'extrémité extérieure d'un moteur de moyeu de roue gauche (302) disposé intégralement dans la roue de déplacement gauche (301) et une surface d'extrémité extérieure d'un moteur de moyeu de roue droite (302) disposé intégralement dans la roue de déplacement droite (301) est plus grande qu'une largeur de coupe de l'ensemble de coupe (10).

9. Dispositif auto-propulsé (1) selon la revendication 1, dans lequel la puissance de sortie du moteur de moyeu de roue (302) est supérieur ou égal à 1 W

10. Dispositif auto-propulsé (1) selon la revendication 1, dans lequel un nombre de paires de pôles magnétiques du moteur de moyeu de roue (302) est supérieur ou égal à 26 paires.

11. Dispositif auto-propulsé (1) selon la revendication 1, dans lequel un angle mécanique entre n'importe quels deux pôles magnétiques adjacents du moteur de moyeu de roue (302) est inférieur ou égal à 6,9°.

12. Dispositif auto-propulsé (1) selon la revendication 1, dans lequel une densité d'énergie du moteur de moyeu de roue (302) est supérieure ou égale à 0,05 W/cm$^3$ et inférieure ou égale à 0,5 W/cm$^3$.

13. Dispositif auto-propulsé (1) selon la revendication 1, dans lequel lorsqu'un poids global du dispositif auto-propulsé (1) est supérieur ou égal à 10 kg et inférieur ou égal à 20 kg, l'épaisseur axiale (d) du moyeu de roue est supérieure ou égale à 3 cm et inférieure ou égale à 4 cm ; lorsque le poids global est supérieur à 20 kg et inférieur ou égal à 40 kg, l'épaisseur axiale (d) du moyeu de roue est supérieure à 4 cm et inférieure ou égale à 6 cm ; et lorsque le poids global est supérieur à 40 kg et inférieur ou égal à 60 kg, l'épaisseur axiale (d) du moyeu de roue est supé-

**EP 4 327 645 B1**

rieure à 6 cm et inférieure ou égale à 9 cm.

Fig. 1

Fig. 2

302

D

d

Fig. 3

20

302

201

40

401A

303A

401

303

402

Y

X

Fig. 4

Fig. 5

Fig. 6

FIG. 7

302

40

402

303

Fig. 8

302 40 I

501

303B 502

Fig. 9

402

303C'

Fig. 10

403

302

40

20

Fig. 11

20

302

40

403

Fig. 12

302

40

501

403

303B

502

Fig. 13

Fig. 14

Fig. 15

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210987025X
- CN 202211066921
- CN 202211066923
- CN 202211067847
- CN 112806165 A
- WO 2021115364 A1